# EUROPEAN PATENT SPECIFICATION

(11) **EP 1 884 446 B1**
(45) Date of publication and mention of the grant of the patent: **01.04.2009**
(21) Application number: 07252887.0
(22) Date of filing: 20.07.2007
(51) Int. Cl.: B62D 3/12, F16H 55/28

(54) **Steering apparatus equipped with ring type support yoke**
Mit einem ringförmigen Druckstück ausgestattete Lenkvorrichtung
Dispositif de direction équipé d'un poussoir de crémaillère de forme annulaire

(30) Priority: 25.07.2006 KR 20060069680
(43) Date of publication of application: 06.02.2008
(73) Proprietor: Mando Corporation, Pyeongtaek-si, Gyeonggi-do (KR)
(72) Inventor: Kim, Jun Hyuk, Wonju-si Gangwon-do (KR); Kim, Ji Yeol, Wonju-si Gangwon-do (KR)
(74) Representative: Neobard, William John

(56) References cited:
- DE-A1- 19 956 839
- US-A- 4 218 933
- US-B1- 6 435 050

## Description

The present invention relates to a steering apparatus. In particular, the present application relates to a steering apparatus equipped with a ring type support yoke, and more particularly to a steering apparatus equipped with a ring type support yoke surrounding and supporting a rack bar at multiple points, thereby reducing the number of the parts and shortening a manufacturing process.

A steering apparatus of an automobile is an apparatus for allowing a driver to change the center of rotation of the front wheels of an automobile, guiding the automobile to a direction desired by the driver.

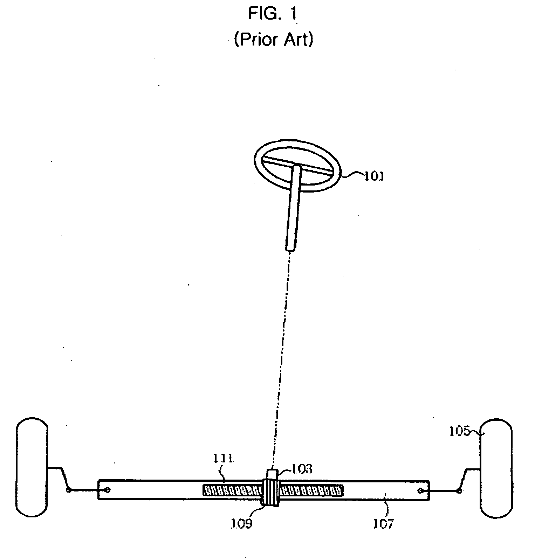

FIG. 1 is a schematic view of a known steering apparatus.

As shown in FIG. 1, the known steering apparatus includes a pinion axis 103 rotating together with a steering wheel 101 while a driver rotates the steering wheel 101, and a rack bar 107 connected, at both ends, to driving wheels 105 so as to linearly move along with the rotation of the pinion axis 103.

A pinion gear 109 is provided on the outer circumference of the pinion axis 103, and a rack gear 111 is provided on one side of the outer circumference of the rack bar 107 so as to be engaged with the pinion gear 109.

Thus, the rack bar 107 linearly moves in an axial direction according to the rotation of the pinion axis 103, so that the direction of both driving wheels 105 is changed. That is, a driver can guide an automobile to a desired direction through the pinion axis 103 and the rack bar 107.

Meanwhile, if the engagement between the pinion gear 109 and the rack gear 111 becomes loose, problems are caused in that the rotational force of the pinion axis 103 cannot be smoothly transferred to the rack bar 107, and noises or vibrations occur. Thus, the engagement between the pinion gear 109 and the rack gear 111 should be firmly maintained through pushing the rack bar 107 against the pinion axis 103.

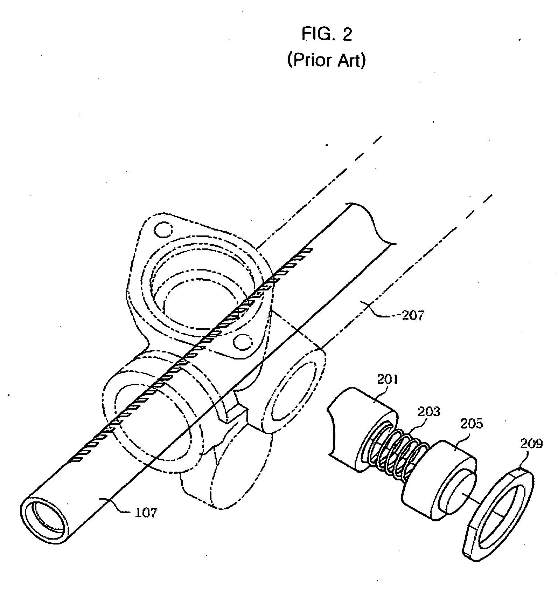

FIG. 2 is a partial exploded perspective view illustrating a known support yoke.

As shown in FIG. 2, the support yoke 201 has both ends, the front end being recessed so as to come into contact with the outer circumference of the rack bar 107, the rear end being supported by a yoke spring 203 and a yoke plug 205.

The yoke plug 205 has a threaded outer circumference which is engaged with a rack housing 207. A lock nut 209 is provided at the rear end of the yoke plug 205 so as to prevent the yoke plug 205 from being detached from the rack housing 207.

According to an arrangement having the above construction, when the yoke plug 205 is moved forward or back, the pressure applied to the rack bar 107 by the yoke spring 203 can be changed, and finally the degree of engagement between the rack gear 111 and the pinion gear 109 can also be regulated.

However, the known arrangement has the following problems.

First, many parts are needed such as the yoke spring, the yoke plug or the like for supporting the support yoke, thereby increasing the manufacturing costs of the steering apparatus.

Moreover, an adjusting process is needed for adjusting the degree of engagement between the rack gear and the pinion gear after assembling the support yoke, thereby extending the manufacturing period of the steering apparatus.

US 4,218,933 describes a rack and pinion gear assembly including a resilient bushing which urges the rack into meshing engagement with the pinion. An arcuate inside bearing surface of the bushing has a larger radius of curvature than the curved outside surface of the rack against which it bears. The rack thus makes tangent contact with the bushing. When one portion of the bushing is worn and therefore excessive play appears in the steering gear assembly, the bushing may be removed from the housing of the assembly and rotated 180° and then reinserted into a housing to thereby provide an unworn bearing surface which slidably engages the rack.

DE 199 56 839 describes a transmission mechanism with a rack and a pinion, which can be used in a steering apparatus and which comprises the features defined in the preamble of claim 1. The transmission mechanism is arranged in a housing and includes a support bearing which serves to take up radial forces and comprises an annular main component and a plain bearing element surrounding the rack. The plain bearing element is preloaded by a spring element radially against the rack and presses the latter against the pinion.

US 6,435,050 describes a rack and pinion steering gear including a housing, a rack bar having a rack gear thereon, a pinion gear rotatably supported on the housing, and rack bearing which slidably engages the rack bar and resiliently thrusts the rack gear against the pinion gear. The pinion gear and the rack bearing constitute a first bearing supporting the rack bar on the steering gear housing for back and forth linear translation. A bushing on the steering gear housing remote from the pinion gear and the rack bearing constitutes a second bearing supporting the rack bar on the steering gear housing for back and forth linear translation. An outboard bearing is provided which suppresses separation between the pinion gear and the rack gear by supplementing the thrust of the rack bearing and by reducing the overhang distance of the rack bar.

Accordingly, the present invention has been made in view of the above-mentioned problems occurring in the known arrangement. An object of some embodiments disclosed herein is to reduce manufacturing costs of a steering apparatus through reducing the number of the parts supporting a support yoke.

Another object of some of the embodiments is to shorten the manufacturing period of a steering apparatus through dispensing with an adjusting process for adjusting the degree of engagement between a rack gear and a pinion gear.

In accordance with an aspect of the present invention, there is provided a steering apparatus comprising: a rack bar provided with a rack gear at one side of the outer circumference thereof and a support at the other side of the outer circumference thereof; a support yoke surrounding the rack bar so as to come into contact with the support; a bush provided to surround the support yoke; and a resilient member provided between the outer circumference of the support yoke and an inner circumference of the bush; characterized in that a protrusion is formed on the outer circumference of the support yoke opposite to the rack gear.

The above and other features of the present invention will be more apparent from the following detailed description taken in conjunction with the accompanying drawings, in which:
FIG. 1 is a schematic view of a known steering apparatus;
FIG. 2 is a partial exploded perspective view illustrating a known support yoke;
FIG. 3 is a partial perspective view of a steering apparatus of an automobile according to an embodiment; and
FIG. 4 is a sectional view taken along line A-A of FIG. 3.

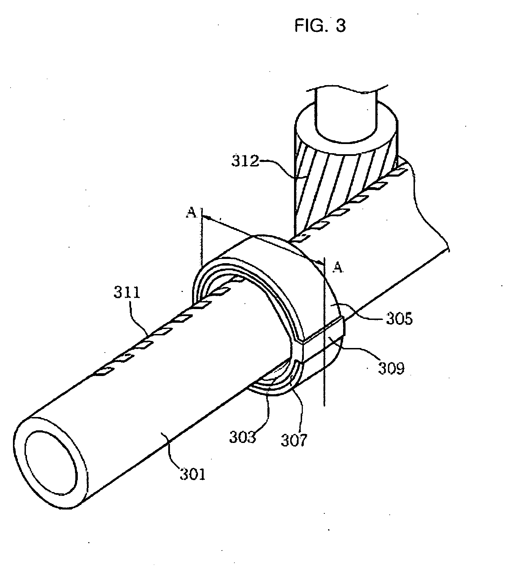

As shown in FIG. 3, the steering apparatus of an automobile includes a cylindrical rack bar 301, a support yoke 303 surrounding the rack bar 301, a bush 305 surrounding the support yoke 303, a resilient member 307 provided between the support yoke 303 and the bush 305, and a protrusion 309 formed on the outer circumference of the support yoke 303.

A rack gear 312 is formed on one side of the outer circumference of the rack bar 301 so as to be engaged with the pinion gear 312, and a support 313 is formed on the other side so as to come into contact with the inner circumference of the support yoke 303. The support 313 may be formed with two or more ones, and a part of the outer circumference of the rack bar 313 may protrude, but it is not limited thereto. In addition, the support 313 may be formed by planarizing the outer circumference of the rack bar 301.

The support yoke 303 is formed like a ring surrounding the rack bar 301 such that the inner circumference thereof comes into contact with the support 313, supporting the other side of the rack bar 301. That is, one side of the rack bar 301 is supported by the pinion gear 312, and the other side thereof is supported by the support yoke 303.

In addition, a portion of the inner circumference of the support yoke 303 contacting the support 313 may be formed such that it protrudes to a certain level.

Thus, contrary to the known arrangement, the present embodiment does not need additional separate parts supporting the support yoke 303, reducing the number of parts and the manufacturing costs of the steering apparatus.

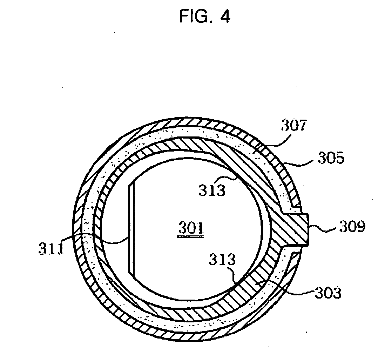

Meanwhile, since the support 313 is formed on the outer circumference of the rack bar 301 parallel with the axial direction of the rack bar 301, it is supported by the support yoke 303 when the rack bar 301 linearly moves in the axial direction, or even does not linearly move. Although the number of the support 313 is preferably two as shown in FIG. 4, it is not essentially limited thereto.

As seen above, according to the present embodiment, after the support yoke 303 is installed on the rack bar 301, the pinion gear 312 is made engaged with the rack gear 311, so that unlike the prior art, the adjusting process for adjusting the degree of engagement between the rack gear and the pinion gear through the adjustment of the yoke plug is not needed.

The bush 305 is formed to surround the outer circumference of the support yoke 303, and the resilient member 307 is provided between the support yoke 303 and the bush 305. Thus, noises or vibrations possibly occurring between the rack gear 111 and the pinion gear 312 can be absorbed by the resilient member 307. The resilient member 307 may be rubber, but it is not limited thereto.

The protrusion 309 is formed on the outer circumference of the support yoke 303 opposite to the rack gear 311, so that when installing the support yoke 303 on the rack bar 301, an operator can check the direction of the rack gear 311 with his/her own eyes, thereby preventing the support yoke from being installed wrongly.

The resilient member 307 preferably extends up to the midway between the protrusion 309 and the bush 305, but it is not limited thereto.

As set forth before, the present embodiment provides an effect of reducing manufacturing costs of the steering apparatus through reducing the number of the parts supporting the support yoke.

Further, the present embodiment provides an effect of shortening the manufacturing period of the steering apparatus through dispensing with the adjusting process for adjusting the degree of engagement between the rack gear and the pinion gear.

The invention is not limited to the described features of the embodiments.

## Claims

1. A steering apparatus comprising:
a rack bar (301) provided with a rack gear (311) at one side of the outer circumference thereof and a support (313) at the other side of the outer circumference thereof;
a support yoke (303) surrounding the rack bar (301) so as to come into contact with the support (313);
a bush (305) provided to surround the support yoke (303) ; and
a resilient member (307) provided between the outer circumference of the support yoke (303) and an inner circumference of the bush (305) ;
**characterized in that** a protrusion (309) is formed on the outer circumference of the support yoke (303) opposite to the rack gear (311).

2. The steering apparatus as claimed in claim 1, wherein a part of the resilient member (307) extends into a gap between the protrusion and the bush.

## Patentansprüche

1. Lenkvorrichtung mit:
einer Zahnstange (301), die mit einem Zahnstangengetriebe (311) auf einer Seite des äußeren Umfangs davon und mit einer Stütze (313) auf der anderen Seite des äußeren Umfangs davon versehen ist;
einem Stützjoch (303), das die Zahnstange (301) umgibt, um mit der Stütze (313) in Kontakt zu gelangen;
einer Buchse (305), die vorgesehen ist, um das Stützjoch (303) zu umgeben; und
einem flexiblen Element (307), das zwischen dem äußeren Umfang des Stützjochs (303) und dem inneren Umfang der Buchse (305) vorgesehen ist;
**dadurch gekennzeichnet, dass** ein Vorsprung (309) auf dem äußeren Umfang des Stützjochs (303) gegenüber dem Zahnstangengetriebe (311) gebildet ist.

2. Lenkvorrichtung nach Anspruch 1, wobei sich ein Teil des flexiblen Elements (307) in einen Spalt zwischen dem Vorsprung und der Buchse erstreckt.

## Revendications

1. Dispositif de direction comprenant :
une barre de crémaillère (301) présentant une crémaillère (311) d'un côté de la circonférence externe de celle-ci et un support (313) de l'autre côté de la circonférence externe de celle-ci ;
un poussoir de crémaillère (303) entourant la barre de crémaillère (301) de manière à entrer en contact avec le support (313) ;
une douille (305) destinée à entourer le poussoir de crémaillère (303) ; et
un membre résilient (307) placé entre la circonférence externe du poussoir de crémaillère (303) et une circonférence interne de la douille (305) ;
**caractérisé en ce qu'**une saillie (309) est formée sur la circonférence externe du poussoir de crémaillère (303) en face de la crémaillère (311).

2. Dispositif de direction selon la revendication 1, dans lequel une partie du membre résilient (307) s'étend dans une ouverture située entre la saillie et la douille.
